# EUROPÄISCHE PATENTSCHRIFT

(11) **EP 1 207 081 B1**
(45) Veröffentlichungstag und Bekanntmachung des Hinweises auf die Patenterteilung: **23.04.2003**
(21) Anmeldenummer: 01121507.6
(22) Anmeldetag: 08.09.2001
(51) Int. Cl.: B60R 13/08, C04B 14/06

(54) **Verfahren zum Herstellen einer Isolationsschicht**
Production method of an insulation layer
Méthode de production d'une couche d'isolation

(30) Priorität: 18.11.2000 DE 10057368
(43) Veröffentlichungstag der Anmeldung: 22.05.2002
(73) Patentinhaber: Bayerische Motoren Werke Aktiengesellschaft, 80809 München (DE)
(72) Erfinder: Bednarek, Henryk, 86899 Landsberg (DE)

(56) Entgegenhaltungen:
- EP-A- 0 340 707
- DE-A- 19 533 564
- DE-U- 29 617 265
- GB-A- 798 669
- US-A- 4 825 974
- US-A- 5 656 195
- US-A- 5 948 314

## Beschreibung

Die Erfindung bezieht sich auf ein Verfahren zum Herstellen einer Isolationsschicht zur Wärme-, Schall- und/oder Feuchtigkeitsisolation von Bauteilen, insbesondere Kraftfahrzeug-Karosserieteilen, nach dem Oberbegriff des Patentanspruchs 1.

Schall-, Feuchtigkeits- und Wärmeisolationsstoffe werden vor allem für Kraftfahrzeug-Karosseriebauteile in zunehmendem Maße benötigt. Soweit jedoch die herkömmlichen Isolationsstoffe überhaupt einen effektiven Kombinationsschutz bieten, sind sie nicht ausreichend eigenstabil oder witterungs- oder hitzebeständig, so dass sie nur in besonders abgeschirmten Einbaubereichen, etwa in Hohlbauteilen, einsetzbar sind.

Nach der DE-A-195 33 564 werden Aerogelpartikel zusammen mit Verstärkungsfasem und einem flüssigen Bindemittel in einem Formwerkzeug unter Druck- und Wärmeeinwirkung zu einer eigenstabilen Isolationsplatte oder einem anderen Formkörper verpresst.

Bei dem aus der US-A-5 948 314 bekannten Verfahren der eingangs genannten Art wird eine unmittelbar auf der Bauteiloberfläche haftende Isolationsschicht in der Weise hergestellt, dass zunächst ein Gemisch aus hydrophoben Aerogelpartikeln und einem Bindemittel in Form einer wässrigen Klebstofflösung, etwa einer Polymerdispersion, in einem Mischer aufbereitet und anschließend direkt auf die Bauteiloberfläche aufgebracht wird. Um eine Entmischung von Aerogelpartikeln und Binder zu verhindern, wird das Gemisch als Suspension hergestellt, d. h. die Aerogelpartikel und das Bindemittel müssen annähernd gleiche Dichte besitzen. Außerdem ist die Standzeit des Gemisches begrenzt, da anderenfalls das Bindemittel vorzeitig aushärtet.

Aufgabe der Erfindung ist es, ein Herstellungsverfahren der eingangs genannten Art zu schaffen, mit welchem selbst an stark belasteten Einbauorten, etwa dem Unterboden oder dem Motorraum eines Kraftfahrzeugs, ohne zusätzliche Abschirmung ein effektiver, dauerhafter Kombinationsschutz auf fertigungstechnisch einfache Weise zu erzielen ist.

Diese Aufgabe wird erfindungsgemäß durch das im Anspruch 1 gekennzeichnete Verfahren gelöst.

Erfindungsgemäß wird aufgrund des aus einem flüssigen Bindemittel und einem hydrophoben Aerogelgranulat bestehenden Gemischauftrags eine eigenstabile und auf dem Bauteil selbsthaftende Isolationsschicht geschaffen, die sich problemlos auch in kritischen Einbaubereichen aufbringen lässt und deren besonderes Charakteristikum darin besteht, dass das Bindemittel unter Ausnutzung der hydrophoben Materialeigenschaften des Aerogels keine geschlossene Umhüllung der Aerogelpartikel bildet, sondern aufgrund des Aufspritzens als Sprühnebel ein schaumförmiges Traggerüst, mit dem die hervorragenden Wärme-, Schall- und Feuchtigkeits-Isolationseigenschaften des Aerogelgranulats nahezu unverändert erhalten bleiben, und zwar auf fertigungstechnisch einfache Weise, nämlich ohne einen separaten, dem Aufspritzen vorgeschalteten Mischvorgang und ohne Beschränkung auf Suspensionen und/oder kurze Standzeiten. Darüber hinaus besitzt die erfindungsgemäß hergestellte Isolationsschicht ein sehr geringes Raumgewicht und ist umweltfreundlich herzustellen und zu entsorgen.

Als Bindemittel wird vorzugsweise ein dauerfester Kleber gewählt, der hinsichtlich Hitzebeständigkeit und Schallabsorptionsvermögen an das in dieser Hinsicht ohnehin hochwirksame Aerogelgranulat angeglichen ist, was sich vor allem für thermisch und akustisch hochbelastete Anwendungsfälle etwa im Bereich des Motorraums oder des Abgasstranges eines Kraftfahrzeugs empfiehlt.

Die Erfindung wird nachfolgend anhand eines in den Figuren schematisch dargestellten Ausführungsbeispiels näher erläutert. Es zeigen:
- **Fig. 1**: eine stark vergrößerte Teilansicht einer Isolationsschicht nach der Erfindung; und
- **Fig. 2**: die lsolationsschicht nach Fig. 1 während des Aufspritzens auf die Bauteiloberfläche.

Die in den Fig. dargestellte Isolationsschicht 2 besteht aus feinen, hydrophoben Aerogelpartikeln 3, die eine offenporige SiO₂-Gitterstruktur mit Porenweiten zwischen 5 und 50 nm und ein Raumgewicht von etwa 100 g/l besitzen. Ein derartiges Aerogelgranulat ist sehr gut wärme- und schalldämmend, äußerst hitzebeständig, feuchtigkeitsabweisend und umweltverträglich. Eingebettet sind die Aerogelpartikel 3 in eine filigrane Tragstruktur 4, welche aus einem Bindemittel in Form eines wasserlöslichen, im ausgehärteten Zustand temperaturbeständigen und auf der mit der Isolationsschicht 2 belegten Bauteiloberfläche gut haftenden Klebstoffs, z.B. auf Acrylpolymerbasis, hergestellt ist.

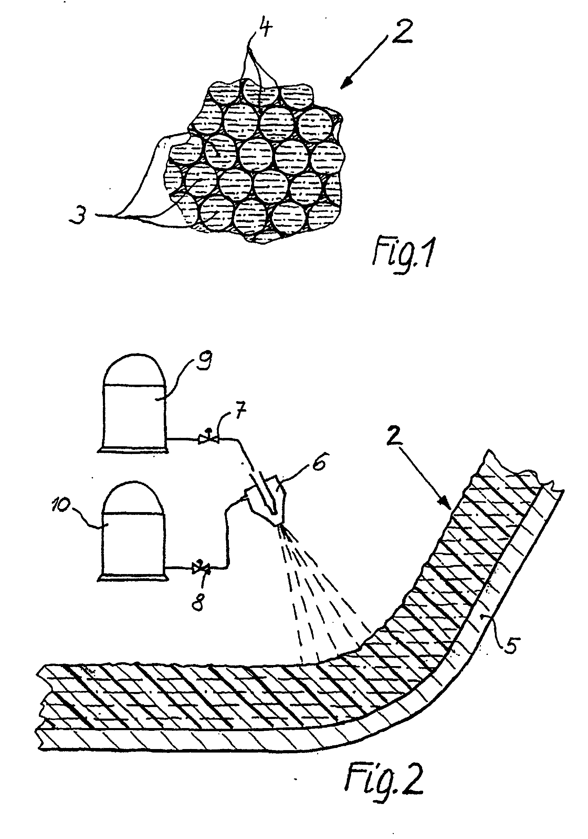

Gemäß Fig.2 wird die Isolationsschicht 2 in Form eines aus der wässrigen Klebstofflösung bestehenden Sprühnebels unter Zugabe des Aerogelgranulats unmittelbar auf die Bauteiloberfläche, etwa ein grundiertes oder auch lackiertes Kraftfahrzeug-Karosserieteil 5 aufgespritzt. Die zu diesem Zweck verwendete Zweikomponenten-Spritzpistole 6, die über Dosierventile 7, 8 an einen Vorratsbehälter 9 für die Klebstofflösung und einen Granulatbehälter 10 angeschlossen ist, wird manuell oder vorzugsweise programmgesteuert bis zum Erreichen der gewünschten Schichtdicke der Isolationsschicht 2 - je nach Anwendungsfall zwischen 3 und 5 mm - über die Bauteiloberfläche geführt. Aufgrund der hydrophoben Oberflächenbeschaffenheit der Aerogelpartikel 3 kann der Klebstoff die Oberfläche des Granulats nicht benetzen, sondern lagert sich in Form feiner Tröpfchen an der Aerogeloberfläche an und bildet damit um die Aerogelpartikel 3 eine offenporige Klebstoffstruktur 4, deren Anteil am Gesamtvolumen etwa 5 bis 15% beträgt.

Die nach dem Konsolidieren der Klebertröpfchen gebildete lsolationsschicht 2 ist somit sehr gut wärme- und schalldämmend sowie hitzebeständig, feuchtigkeitsabweisend und umweltverträglich, bei zugleich niedrigem Raumgewicht eigenstabil sowie einfach herzustellen und problemlos auch in kritischen Einbaubereichen, etwa als Hitze- und/oder Schallschutzschild im Bereich der Motorraum- oder Getriebewände, am Bodenblech oder auch im Abgasstrang eines Kraftfahrzeugs, anzubringen.

## Patentansprüche

1. Verfahren zum Herstellen einer Isolationsschicht (2) zur Wärme-, Schall- und/oder Feuchtigkeitsisolation von Bauteilen- insbesondere Kraftfahrzeug-Karosserieteilen (5), bei dem die Isolationsschicht (2) aus einem Gemisch aus hydrophoben Aerogelpartikeln (3) und einem auf der Bauteiloberfläche haftenden Bindemittel (4) auf das Bauteil (5) auf gebracht wird, **dadurch gekennzeichnet, dass** das Bindemittel (4) in Form eines Sprühnebels zusammen mit der Aerogelpartikeln (3) auf das Bauteil (5) aufgespritzt wird.

2. Verfahren nach Anspruch 1, **dadurch gekennzeichnet, dass**
als Bindemittel (4) ein warmfester, niedrigviskoser Klebstoff verwendet wird.

3. Verfahren nach Anspruch 1 oder 2, **dadurch gekennzeichnet, dass**
das Bindemittel (4) in Form einer wässrigen Klebstofflösung aufgebracht wird.

4. Verfahren nach einem der vorhergehenden Ansprüche, **gekennzeichnet durch**
Einlagerung des Bindemittels (4) als offenporige Schaumstoffstruktur in die Aerogelzwischenräume.

## Claims

1. A method of producing an insulating layer (2) for heat, sound and/or moisture proofing of components, especially vehicle body components (5), wherein the insulating layer (2) comprises a mixture of water-repellent aerogel particles (3) and a binder (4) adhering to the surface of the component is applied to the component (5), **characterised in that** the binder (4) in the form of a spray is sprayed together with the aerogel particles (3) on to the component (5).

2. A method according to claim 1, **characterised in that** the binder (4) is a heat-resistant low-viscosity adhesive.

3. A method according to claim 1 or claim 2, **characterised in that** the binder (4) is applied in the form of an aqueous adhesive solution.

4. A method according to any of the preceding claims, **characterised by** incorporation of the binder (4) in the form of an open-pore foam structure in the interstices in the aerogel.

## Revendications

1. Procédé pour fabriquer une couche d'isolation (2) destinée à l'isolation thermique, acoustique et/ou à l'imperméabilisation de composants, en particulier des pièces de carrosseries (5) de véhicules, pour lequel la couche d'isolation (2), composée d'un mélange de particules d'aérogel (3) hydrophobes et d'un liant (4) adhérant à la surface de composant, est appliquée sur le composant (5),
**caractérisé en ce que**
le liant (4) sous forme d'un brouillard de pulvérisation conjointement avec les particules d'aérogel (3) est appliqué au pistolet sur le composant (5).

2. Procédé selon la revendication 1,
**caractérisé en ce que**
l'on utilise en tant que liant (4) une matière collante résistante à la chaleur et à basse viscosité.

3. Procédé selon la revendication 1 ou 2,
**caractérisé en ce que**
le liant (4) est appliqué sous forme d'une solution de matière collante aqueuse.

4. Procédé selon l'une des revendications précédentes,
**caractérisé par**
l'inclusion du liant (4) en tant que structure de produit alvéolaires à pores ouverts dans les espaces intermédiaires d'aérogel.
